# FASCICULE DE BREVET EUROPEEN

(11) **EP 0 433 144 B1**
(45) Date de publication et mention de la délivrance du brevet: **16.03.1994**
(21) Numéro de dépôt: 90403489.9
(22) Date de dépôt: 07.12.1990
(51) Int. Cl.: H02M 1/00, H02M 3/158

(54) **Alimentation du type convertisseur alternatif-continu à découpage**
Netzteil vom Typ AC-DC-Wandler
Switch mode AC-DC power supply

(30) Priorité: 12.12.1989 FR 8916396
(43) Date de publication de la demande: 19.06.1991
(73) Titulaire: SEXTANT AVIONIQUE, F-92360 Meudon-la-Forêt (FR)
(72) Inventeur: Huillet, Henri, F-92045 Paris La Defense (FR)
(74) Mandataire: Courtellemont, Alain

(56) Documents cités:
- US-A- 4 591 963
- PATENT ABSTRACTS OF JAPAN vol. 7, no. 251 (E-209)(1396) 08 novembre 1983; & JP-A-58 136265 (NIPPON DENKI K. K.) 13 août 1983.

## Description

La présente invention se rapporte à une alimentation du type convertisseur alternatif-continu à découpage, c'est-à-dire à une alimentation qui à partir d'une tension délivrée par un réseau alternatif va fournir une tension continue de sortie en utilisant pour cela un circuit redresseur d'entrée et, entre ce circuit et sa sortie, des moyens d'interruption commandés en fonction de la tension de sortie de l'alimentation pour réguler cette tension de sortie ; de plus cette alimentation doit consommer sur le réseau un courant sinusoïdal en phase avec la tension afin d'optimiser le facteur de puissance de l'alimentation, c'est-à-dire afin que le rapport de la puissance active nécessaire sur la puissance apparente consommée sur le réseau soit sensiblement égal à 1.

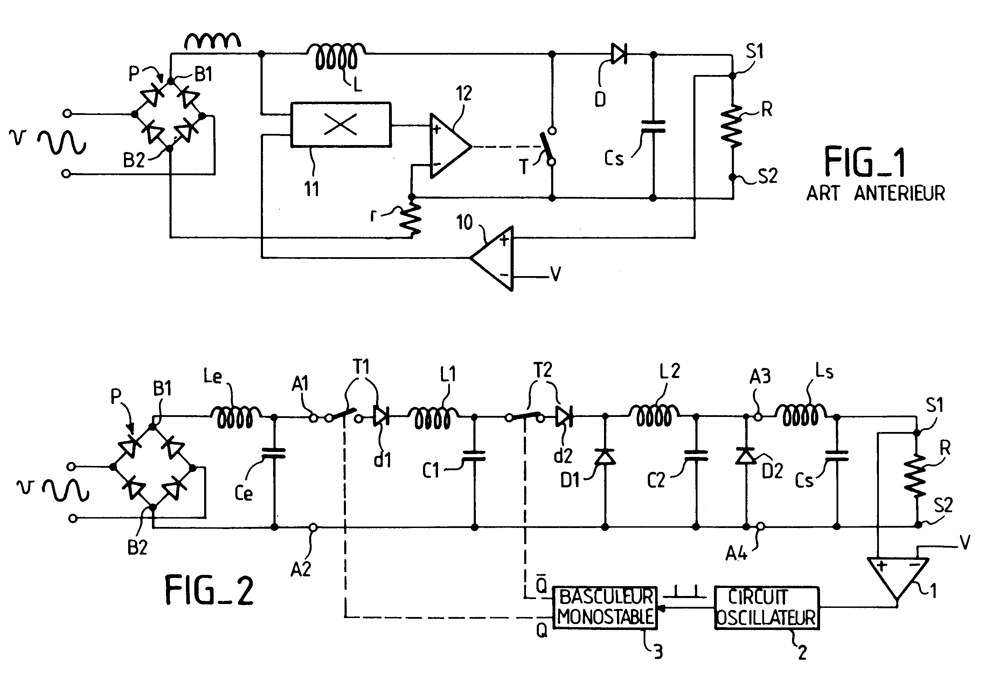

De telles alimentations existent et seront décrites à l'aide de la figure 1 ci-jointe. Dans ces alimentations connues, qui sont dites à découpage anharmonique à commutation forcée, la commutation est amenée à s'effectuer au moment où des courants circulent dans les moyens d'interruption; il en résulte des pertes par commutation, des perturbations sous forme de pics de courants préjudiciables au bon état de fonctionnement des composants de l'alimentation et des perturbations par rayonnement. De plus ces alimentations qui fonctionnent à des fréquences maximales de commutation de l'ordre de 200 kHz, sont relativement volumineuses.

La présente invention a pour but d'éviter ou, pour le moins, de réduire ces inconvénients.

Du document JP -A-58136265 est connue une alimentation à découpage constituée d'un quadripôle comportant à la suite entre sa première entrée et sa première sortie une première inductance, un premier interrupteur, une première borne d'un premier condensateur, une première borne d'un conducteur unidirectionnel, un second interrupteur, une seconde inductance et la première borne d'un second condensateur, les secondes bornes des premier et second interrupteurs et du conducteur unidirectionnel étant couplées à la seconde entrée et à la seconde sortie du quadripôle, les deux interrupteurs étant, par l'intermédiaire d'un circuit de commande, commutés alternativement.

La présente invention a pour objet une alimentation comportant des moyens d'interruption disposés et commandés à des fréquences très élevées de manière que le courant qui les traverse soit nul au moment de leur ouverture et que leur volume soit faible, cette alimentation étant telle que définie par la revendication 1.

D'autres objets et d'autres caractéristiques apparaîtront à l'aide de la description ci-après et des figures s'y rapportant qui représentent :
- la figure 1, un schéma simplifié d'une alimentation selon l'art antérieur,
- la figure 2, un schéma d'une alimentation selon l'invention.

La figure 1 est le schéma simplifié d'une alimentation du type convertisseur alternatif-continu à découpage selon l'art connu.

Un pont redresseur P fournit entre ses bornes de sortie B1, B2, et à partir d'une tension alternative d'entrée, v, une tension formée d'arches de sinusoïdes redressées. La borne B1 est couplée par une inductance L suivie d'une diode D, à l'une des deux bornes de sortie S1, S2 de l'alimentation ; une charge R figurée par une résistance est branchée entre les bornes S1 S2 ; la diode D est disposée pour être passante pour le courant redressé par le pont P. La borne B2 est reliée à la borne S2 par une résistance r. Un condensateur Cs est branché entre les bornes S1 S2. Un interrupteur électronique, T, figuré par un contact, est monté entre le point commun à l'inductance L et à la diode D, et la borne S2. Cet interrupteur est commandé par un premier comparateur 12 dont l'entrée "+" est reliée à la sortie d'un circuit multiplieur 11 et dont l'entrée "-" est reliée à la borne S2. Un second comparateur 10 a son entrée "+" reliée à la borne S1 et son entrée "-" reliée à une tension continue de référence V ; la sortie du comparateur 10 est reliée à l'une des deux entrées du multiplieur 11 dont l'autre entrée est reliée à la borne B1.

Le comparateur 12 compare le courant qui circule dans l'inductance L et donc dans la résistance r, à un signal de consigne qui est une sinusoïde redressée de même fréquence que celle du réseau et d'amplitude proportionnelle à la puissance à transmettre ; ce signal de consigne est obtenu en multipliant la valeur de la tension redressée fournie par le pont redresseur P, par le résultat de la comparaison effectuée par le comparateur 10 entre la tension de sortie de l'alimentation et la tension de référence V.

Tel qu'il est monté l'interrupteur T s'ouvre et se ferme à un rythme de 100 à 200 kHz ; la valeur de ce rythme est déterminée en fonction de la valeur donnée à l'inductance L ; et la commande de l'interrupteur T est réglée pour que l'enveloppe du courant dans l'inductance L soit une sinusoïde redressée.

Avec le montage selon la figure 1 l'ouverture et la fermeture de l'interrupteur T, qui sont forcées par l'état de la sortie du comparateur 12 et qui se produisent alors que des courants circulent respectivement dans l'interrupteur T et dans la diode D, entraînent des pertes de commutation et des perturbations dans l'interrupteur.

La figure 2 est le schéma d'une alimentation du type convertisseur alternatif-continu à découpage, selon l'invention.

Un pont redresseur P fournit, entre ses bornes de sortie B1, B2, et à partir d'une tension alternative d'entrée, v, de 117 V et 400 Hz, délivrée par un réseau, une tension formée d'arches de sinusoïdes redressées. La borne B1 est couplée par une inductance Le à une première borne d'entrée A1 d'un quadripôle dont l'autre borne d'entrée porte la référence A2 et les bornes de sortie les références A3 et A4. La borne B2 est reliée à la borne A2 et est couplée à la borne A1 par un condensateur Ce.

La borne A1 est reliée à la borne A3 par un premier interrupteur unidirectionnel T1, suivi d'une inductance L1, suivie d'un second interrupteur unidirectionnel T2, suivi d'une inductance L2. Les interrupteurs unidirectionnels T1 et T2 sont des transistors commandés respectivement par les sorties directe Q et inversée Q̅ d'un basculeur monostable 3 ; ils ont été représentés sur la figure 2 par un contact en série avec une diode : d1 pour T1, d2 pour T2.

Le quadripôle a sa borne d'entrée A2 reliée à sa borne de sortie A4 ; ces deux bornes sont couplées par un condensateur C1, une diode D1 et un condensateur C2 en parallèle avec une diode D2, respectivement au point commun de l'inductance L1 et de l'interrupteur T2, au point commun de l'interrupteur T2 et de l'inductance L2 et à la borne A3.

La borne A3 du quadripôle est couplée à l'une, S1, des deux bornes de sortie de l'alimentation par une inductance Ls. La borne A4 du quadripôle est reliée à la borne S2 de l'alimentation et est couplée par un condensateur Cs à la borne S1 de l'alimentation. Une charge R, figurée par une résistance, est branchée entre les bornes de l'alimentation. L'inductance Ls forme avec le condensateur Cs un filtre passe-bas qui est disposé en sortie de l'alimentation.

Un comparateur 1 a son entrée "+" reliée à la borne de sortie S1 de l'alimentation et son entrée "-" reliée à une source de tension de référence continue V.

La sortie du comparateur 1 est reliée à l'entrée de commande d'un circuit oscillateur 2 qui, en fonction de son signal de commande, délivre des impulsions à une fréquence pouvant varier de 0 à 1 MHz. Ces impulsions commandent le basculement du basculeur 3.

Le basculeur monostable 3 a une durée de son état quasi-stable qui est fixée à 280 ns. Pendant la durée de son état quasi-stable il commande le fermeture de l'interrupteur T1 et l'ouverture de l'interrupteur T2 et inversement quand il n'est pas dans son état quasi-stable.

Le courant qui circule dans l'interrupteur T1 est une demi-sinusoïde de haute fréquence dont la durée est déterminée par la fréquence de résonance du circuit oscillant constitué par les éléments L1, C1 et dont l'amplitude est proportionnelle à la valeur instantanée de la tension alternative d'entrée, v. L'enveloppe du courant suit donc, en phase, la sinusoïde redressée de la tension d'entrée.

Le filtre haute-fréquence d'entrée, constitué par les éléments Le, Ce permet, en éliminant les composantes à hautes fréquences du courant circulant dans l'interrupteur T1, de ne garder que l'enveloppe sinusoïdale du courant d'entrée à la fréquence, F, du réseau.

Lorsque l'interrupteur T1 est fermé, le condensateur C1 se charge sinusoïdalement, à travers l'inductance L1 jusqu'à deux fois la tension d'entrée. Cette charge s'effectue en haute fréquence, le circuit oscillant L1-C1 ayant une fréquence de résonance de 2 MHz. La charge du condensateur C1 se fait pendant la durée de l'état quasi-stable du basculeur 3 et cette durée, égale à 280 ns, est supérieure à la demi-période du circuit oscillant L1-C1, c'est-à-dire à 250 ns ; ainsi le condensateur C1 a fini de se charger au moment ou l'interrupteur T1 s'ouvre, c'est-à-dire qu'il ne circule pas de courant dans cet interrupteur au moment où il s'ouvre.

Le rôle de la diode d1 est d'éviter la décharge du condensateur C1 en empêchant que le courant dans l'inductance L1 s'inverse.

A l'ouverture de T1, le condensateur C1 est chargé ; à la fermeture de T2, qui est simultanée avec l'ouverture de T1, l'énergie stockée dans le condensateur C1 est transférée sinusoïdalement, en haute fréquence, à travers l'inductance L2, dans la charge de sortie R et dans le condensateur C2.

La diode d2 empêche le courant qui circule dans l'inductance L2 de s'inverser et donc de recharger le condensateur C1.

La diode D1, en dérivant à travers elle le courant de l'inductance L2, empêche le condensateur C1 de se décharger jusqu'à une tension négative.

De même la diode D2, en dérivant à travers elle le courant de l'inductance Ls, empêche le condensateur C2 de se charger négativement.

Tant que, pendant un cycle de découpage c'est-à-dire pendant la durée d'une fermeture et d'une ouverture consécutives de l'interrupteur T1, l'énergie stockée dans le condensateur C1 reste inférieure à celle consommée par la charge R, le condensateur C2 ne peut pas se charger car toute l'énergie stockée dans le condensateur C1 est entièrement consommée par la charge R.

Lorsque, pendant un cycle de découpage, l'énergie stockée dans le condensateur C1 est supérieure à celle consommée par la charge R, le condensateur C2 se charge en stockant la différence entre ces deux énergies et cette énergie stockée dans le condensateur C2 est consommée par la charge R avant toute nouvelle charge du condensateur C1, c'est-à-dire avant que commence un nouveau cycle de découpage.

Cette façon de réguler la tension de sortie de l'alimentation est réalisée à l'aide du circuit oscillant 2 dont la fréquence est commandée par la tension de sortie du comparateur 1 qui joue le rôle d'amplificateur d'erreur en comparant la tension de sortie de l'alimentation à la tension de référence V ; et, comme il a été vu ci-avant, les impulsions que délivre le circuit oscillant 2 commandent la fermeture de l'interrupteur T1 pendant 280 ns et l'ouverture de l'interrupteur T2 pendant le même laps de temps.

Il est à noter que le comparateur 1 comporte un filtre passe-bas sur son entrée "+" afin de ne pas tenir compte de la faible ondulation résiduelle à la fréquence du réseau que présente la sortie de l'alimentation.

La présente invention n'est pas limitée à l'exemple décrit, c'est ainsi, en particulier, qu'un transformateur de liaison peut être inséré dans le quadripôle, en aval de l'interrupteur T1. De même les interrupteurs unidirectionnels T1 et T2 peuvent être constitués par deux éléments distincts : un interrupteur bidirectionnel et un élément semi-conducteur et dans ce cas, sur la figure 2, les places occupées par les éléments d1 et L1 peuvent être échangées.

De même, dans l'exemple décrit, la fréquence de résonance du circuit oscillant L1-C1 a été choisie de valeur très élevée, par rapport à celle du réseau alternatif, puisqu'il y a un rapport de 5000 entre les deux fréquences ; le rapport entre ces deux fréquences peut être moins élevé, tout en restant supérieur à 1000, à condition de réduire en conséquence la fréquence maximale que peut atteindre le circuit oscillateur 2 et de régler la durée de l'état quasi-stable du basculeur monostable 3 de manière qu'elle reste au moins égale ou juste un peu supérieure à la demi-période du circuit oscillant L1, C1. Cependant il est à remarquer que la puissance transmise à la charge sera d'autant plus importante que le nombre de fois par seconde où le condensateur C1 sera chargé et déchargé sera grand; ceci conduit donc à déterminer, pour une fréquence maximale de découpage du circuit 2 et pour la puissance maximale désirée, les valeurs de L1 et C1.

## Revendications

1. Alimentation du type convertisseur alternatif-continu à découpage avec un circuit de redressement bi-alternances (P), suivi d'un filtre haute-fréquence (Le, Ce) couplé par un quadripôle à un filtre basse fréquence (Ls, Cs) délivrant une tension de sortie, le quadripôle comportant à la suite entre sa première entrée (A1) et sa première sortie (A3), un premier interrupteur unidirectionnel (T1), une première inductance (L1), une première borne d'un premier condensateur (C1), un second interrupteur unidirectionnelle (T2), une première borne d'un premier conducteur unidirectionnel (D1), une seconde inductance (L2) et une première borne d'un second condensateur (C2) et d'un second conducteur unidirectionnel (D2), les secondes bornes des premier et second condensateurs et des premier et second conducteurs unidirectionnels étant couplées à la seconde entrée (A2) et à la seconde sortie (A4) du quadripôle, et l'alimentation comportant un circuit monostable(3) dont l'état quasi-stable a une durée légèrement supérieure à l'inverse de la fréquence de résonance du circuit oscillant (L1, C1) constitué par la première inductance et le premier condensateur, pour commander la fermeture du premier interrupteur et l'ouverture du second interrupteur pendant son état quasi-stable et inversement en dehors de son état quasi-stable et un circuit oscillateur (2), commandé en fonction de la tension de sortie, pour fournir des impulsions de déclenchement du circuit monostable.

2. Alimentation selon la revendication 1, dont le circuit de redressement (P) est branché sur un réseau fournissant une tension alternative de fréquence donnée, caractérisée en ce que la fréquence de résonance du circuit oscillant (L1, C1) est plus de mille fois supérieure à la fréquence donnée.

## Claims

1. Power supply of the switched-mode AC/DC converter type, with a full-wave rectifier circuit (P), followed by a high-frequency filter (Le, Ce) coupled by a four-pole network to a low-frequency filter (Ls, Cs) delivering an output voltage, the four-pole network including, in series between its first input (A1) and its first output (A3), a first unidirectional switch (T1), a first inductor (L1), a first terminal of a first capacitor (C1), a second unidirectional switch (T2), a first terminal of a first unidirectional conductor (D1), a second inductor (L2) and a first terminal of a second capacitor (C2) and of a second unidirectional conductor (D2), the second terminals of the first and second capacitors and of the first and second unidirectional conductors being coupled to the second input (A2) and to the second output (A4) of the four-pole network, and the power supply including a monostable circuit (3) the quasi-stable state of which has a duration slightly longer than the inverse of the resonance frequency of the oscillating circuit (L1, C1) constituted by the first inductor and the first capacitor, for controlling the closing of the first switch and the opening of the second switch during its quasi-stable state and conversely outside its quasi-stable state and an oscillator circuit (2), controlled as a function of the output voltage, for supplying pulses for triggering the monostable circuit.

2. Power supply according to Claim 1, in which the rectifier circuit (P) is connected to mains supplying an alternating voltage of a given frequency, characterized in that the resonance frequency of the oscillating circuit (L1, C1) is more than a thousand times higher than the given frequency.

## Patentansprüche

1. Netzgerät vom Typ eines Wechselstrom-Gleichstrom-Wandlers mit Schaltmitteln und einem Zweiweg-Gleichrichterkreis (P), gefolgt von einem Hochfrequenzfilter (Le, Ce), das über einen Vierpol an ein eine Ausgangsspannung lieferndes Tiefpaßfilter (Ls, Cs) gekoppelt ist, wobei der Vierpol nacheinander zwischen seinem ersten Eingang (A1) und seinem ersten Ausgang (A3) einen ersten in einer Richtung leitfähigen Schalter (T1), eine erste Induktivität (L1), eine erste Klemme eines ersten Kondensators (C1), einen zweiten in einer Richtung leitfähigen Schalter (T2), eine erste Klemme eines in einer Richtung leitenden Organs (D1), eine zweite Induktivität (L2) und eine erste Klemme eines zweiten Kondensators (C2) und eines zweiten in einer Richtung leitenden Organs (C2) aufweist, wobei die zweiten Klemmen des ersten und des zweiten Kondensators und des ersten und zweiten in einer Richtung leitenden Organs an den zweiten Eingang (A2) und den zweiten Ausgang (A4) des Vierpols gekoppelt sind, und wobei das Netzgerät weiter eine monostabile Kippstufe (3), deren unstabiler Zustand geringfügig länger als der Kehrwert der Resonanzfrequenz des Schwingkreises dauert, der von der ersten Induktivität (L1) und dem ersten Kondensator (C1) gebildet wird, um das Schließen des ersten Schalters und das Öffnen des zweiten Schalters während seines instabilen Zustands und den umgekehrten Schaltzustand in seinem stabilen Zustand zu erreichen, und einen Oszillator (2) besitzt, der abhängig von der Ausgangsspannung gesteuert wird, um Auslöseimpulse für die monostabile Kippstufe zu liefern.

2. Netzgerät nach Anspruch 1, dessen Gleichrichter (P) an ein eine Wechselspannung einer gegebenen Frequenz lieferndes Netz angeschlossen ist, dadurch gekennzeichnet, daß die Resonanzfrequenz des Schwingkreises (L1, C1) mehr als tausendmal größer als die gegebene Frequenz ist.
